# FASCICULE DE BREVET EUROPEEN

(11) **EP 1 583 960 B1**
(45) Date de publication et mention de la délivrance du brevet: **11.10.2006**
(21) Numéro de dépôt: 04701037.6
(22) Date de dépôt: 09.01.2004
(51) Int. Cl.: G01N 30/72, H01J 49/04

(54) **DISPOSITIF DE COUPLAGE AUTOMATISE ENTRE UN MICRO-CHROMATOGRAPHE ET UN SPECTROMETRE DE MASSE COMPRENANT UN AJUSTEMENT DE TEMPERATURE**
EINRICHTUNG ZUR AUTOMATISIERTEN KOPPLUNG ZWISCHEN EINEM MIKROCHROMATOGRAPH UND EINEM MASSENSPEKTROMETER MIT TEMPERATUREINSTELLUNG
DEVICE FOR AUTOMATED COUPLING BETWEEN A MICRO-CHROMATOGRAPH AND A MASS SPECTROMETER COMPRISING TEMPERATURE ADJUSTMENT

(30) Priorité: 14.01.2003 FR 0300343
(43) Date de publication de la demande: 12.10.2005
(73) Titulaire: COMMISSARIAT A L'ENERGIE ATOMIQUE, 75752 Paris Cédex 15 (FR); CENTRE NATIONAL DE LA RECHERCHE SCIENTIFIQUE (CNRS), 75794 Paris Cedex 16 (FR)
(72) Inventeur: COZIC, Ronan, F-91640 Briis-sous-Forges (FR); GASS, Jean-Louis, F-38540 Saint Just Chaleyssin (FR); BOURLIAUD, Jean, F-75013 Paris (FR)
(74) Mandataire: Poulin, Gérard
(86) Numéro de dépôt international: PCT/FR2004/050010
(87) Numéro de publication internationale: WO 2004/065956

(56) Documents cités:
- FR-A- 2 817 347
- US-A- 4 501 817
- US-A- 4 662 914
- US-A- 4 970 905
- US-A- 4 988 870
- US-A- 5 281 397
- US-A- 5 424 539
- HAIL M E ET AL: "THEORETICAL AND PRACTICAL ASPECTS OF SHORT OPEN TUBULAR COLUMNS AT SUBAMBIENT PRESSURES IN GAS CHROMATOGRAPHY/MASS SPECTROMETRY" ANALYTICAL CHEMISTRY, AMERICAN CHEMICAL SOCIETY. COLUMBUS, US, vol. 61, no. 21, 1 novembre 1989 (1989-11-01), pages 2402-2410, XP000134377 ISSN: 0003-2700

## Description

L'invention a trait à un dispositif de couplage d'un chromatographe (ou micro-chromatographe) et d'un spectromètre de masse, du genre comprenant un ajustement de température à l'interface.

Elle constitue un perfectionnement du brevet français 2817347 dans lequel est décrite une interface de type ouvert, tout en pouvant dans certaines réalisations, concerner des couplages un peu différents, par exemple celui utilisant l'interface de type fermé. On donnera brièvement quelques considérations extraites de ce brevet antérieur pour introduire l'invention.

La combinaison d'un micro-chromatographe et d'un spectromètre de masse est particulièrement intéressante pour mener certaines analyses de produits gazeux. Il faut toutefois veiller à maintenir des conditions convenables de fonctionnement pour ces deux appareils complètement différents. C'est ainsi que le micro-chromatographe est muni en aval d'un détecteur tel qu'un catharomètre (ou un microcatharomètre) qui enregistre les pics de chromatographie par la variation de composition de l'éluat qui le traverse. Sa mesure n'est toutefois correcte qu'à pression constante, par exemple à la pression atmosphérique. Le spectromètre de masse travaille cependant sous vide secondaire. Il faut donc produire une différence de pression déterminée entre les deux moyens de mesure alors qu'ils sont proches l'un de l'autre sur l'appareillage, tout en se prémunissant contre les inégalités de fonctionnement provenant, notamment, du pompage du spectromètre et de variations du débit gazeux circulant à travers la colonne chromatographique.

Dans le brevet précédent, l'interface entre le chromatographe et le spectromètre de masse était ouverte, c'est-à-dire communiquant avec l'extérieur, et la colonne chromatographique débouchait dans un tube capillaire menant au spectromètre de masse. La communication avec l'extérieur permettait de maintenir une pression constante au catharomètre. Si le débit s'écoulant du chromatographe était supérieur à celui prélevé par le spectromètre, et imposé par les caractéristiques physiques du tube capillaire, une partie de l'éluat gazeux était rejetée hors de l'appareillage et perdue pour la mesure. Dans le cas contraire, le gaz extérieur entrait dans l'appareillage et dans le capillaire et participait à la mesure du spectromètre de masse en la faussant.

Les inventeurs de ce brevet antérieur avaient accordé le débit du spectromètre de masse et le débit du chromatographe par un chauffage réglable de l'interface, après avoir constaté qu'un chauffage de l'interface diminuait le débit de gaz admis dans le tube capillaire du spectromètre de masse, et qu'au contraire un refroidissement augmentait ce débit. Il était proposé d'examiner le signal du bruit de fond du spectromètre de masse pour détecter l'entrée du gaz extérieur et maintenir celui-ci à une quantité aussi petite que possible afin d'égaliser au mieux les débits passant par le spectromètre et par le chromatographe. Dans le cas où l'air extérieur entourait l'appareil et pouvait y pénétrer, il était conseillé de suivre les intensités des pics de l'eau, de l'azote et de l'oxygène dans le spectromètre de masse : une augmentation des pics caractéristiques de l'air, c'est-à-dire des pics d'azote et d'oxygène par rapport au pic caractéristique de l'eau traduisait une entrée d'air. L'opérateur pouvait alors ajuster la température à l'interface pour corriger le débit en conséquence.

Il est malheureusement apparu que ce procédé ne se prêtait pas facilement à une automatisation. L'objet de l'invention est donc de fournir un dispositif permettant d'ajuster les débits entre le détecteur d'un chromatographe et un spectromètre de masse situé en aval de façon aussi bonne que dans le brevet antérieur, mais de façon automatique. La solution proposée consiste à adopter une autre mesure pour accomplir le réglage de température. Plusieurs possibilités intéressantes existent, qui reposent sur la mesure d'une fuite, ou bien d'une pression à un endroit approprié de l'appareillage.

La pression est en effet un paramètre simple, directement corrélé à une irrégularité de débit et qui peut donc être exploité facilement par un moyen d'asservissement usuel tout en permettant une correction presque immédiate. Le lieu de mesure sera souvent à l'interface entre le chromatographe et le spectromètre, mais il pourra aussi être ailleurs, plus en aval et notamment au spectromètre ; des dispositifs assez différents d'aspect pourront être préconisés selon la nature de l'interface (ouverte ou fermée).

L'invention concerne encore un dispositif d'analyse comprenant un micro-chromatographe et un spectromètre de masse, la sortie du micro-chromatographe étant reliée à l'entrée du spectromètre de masse par un dispositif de couplage automatisé selon la définition précédente ; et qui peut être muni, en outre, en amont du micro-chromatographe, d'un dispositif de pré-concentration reposant sur une adsorption suivie d'une thermo-désorption, par exemple le pré-concentrateur Airsense® « µTD ».

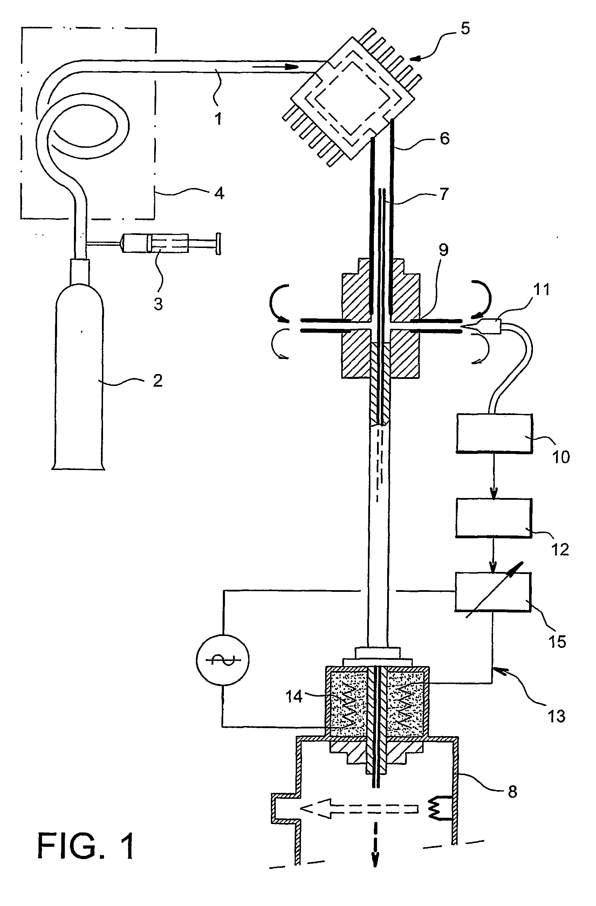

L'invention sera maintenant décrite en liaison aux figures 1, 2 et 3, qui représentent des réalisations respectives de l'invention.

La figure 1 illustre un appareillage sur lequel l'invention est susceptible d'être implantée. Il comprend une colonne chromatographique 1 alimentée en amont par une source de gaz vecteur ou éluant et par un injecteur du produit à analyser ou soluté. La colonne chromatographique 1 est chauffée dans un four 4 à la température voulue. Il est connu que les composants du produit à analyser traversent la colonne 1 à des vitesses différentes selon leur affinité chimique avec une phase stationnaire spécifique y étant contenue. Un microcatharomètre 5 est disposé à la sortie de la colonne 1 et mesure de façon connue les variations de composition du gaz qui le traverse. La colonne se poursuit en un tube 6 au-delà du microcathoromètre 5, qui ne contient généralement pas de phase stationnaire et dans lequel les gaz peuvent circuler. Un tube capillaire 7 est logé dans le tube 6 et le prolonge jusqu'à un spectromètre de masse 8 qui effectue une autre mesure sur les composés séparés par le chromatographe. Le tube 6 comprend au moins une ouverture 9 non loin de l'extrémité du tube capillaire 7 afin de maintenir la pression au microcatharomètre 5 à une valeur invariable, selon l'avantage de cette interface ouverte entre la colonne 1 et le spectromètre 8. La propriété essentielle du tube capillaire 7 est de ne permettre le passage que d'un débit maximal de gaz dépendant de la température. Si le débit sortant de la colonne 1 est supérieur, l'excédent fuit du tube 6 à l'ouverture 9 ; sinon, du gaz environnant entre dans le tube 6, puis dans le tube capillaire 7 et aboutit au spectromètre de masse 8 si cette condition se maintient.

Selon un mode de réalisation de l'invention, il est prévu de disposer un détecteur de fuite de gaz 10 à l'ouverture 9. Il peut comprendre lui aussi un microcatharomètre et fonctionner à partir de la différence de conductivité thermique entre le gaz ambiant et le gaz de fuite. Il comprend une sonde aspirante 11 placée à l'ouverture 9. Le détecteur de fuite LD 228 de la société GL Sciences a par exemple une sensibilité de 0,01 ml par minute, ce qui est suffisant dans l'application considérée pour donner de bons résultats.

D'autres détecteurs pourraient être envisagés et notamment des débimètres, par exemple de type Honeywell® « AWM 40000 Series », également sensibles à une variation de conductivité thermique. L'avantage est de pouvoir plus facilement récupérer le signal mesuré pour contrôler ensuite la régulation en température de l'interface.

Le signal du détecteur 10 est fourni à un module de commande 12 qui agit sur un moyen de réglage de température 13 de l'interface. Ce moyen 13 peut, de façon analogue au brevet précédent, consister en un circuit électrique comprenant une résistance 14 de chauffage située par exemple près du spectromètre de masse 8. Préférentiellement, le moyen 13 doit consister en un système de chauffage homogène de la longueur maximale du tube capillaire 7. Il comprend ici un élément réglable 15 sur lequel agit le module de commande 12 en fonction du signal du détecteur 10. Le module de commande 12 peut comprendre une carte électronique ou un moyen de calibration analogue donnant un réglage de l'élément 15 en fonction du signal reçu exprimant l'écart avec un état souhaité.

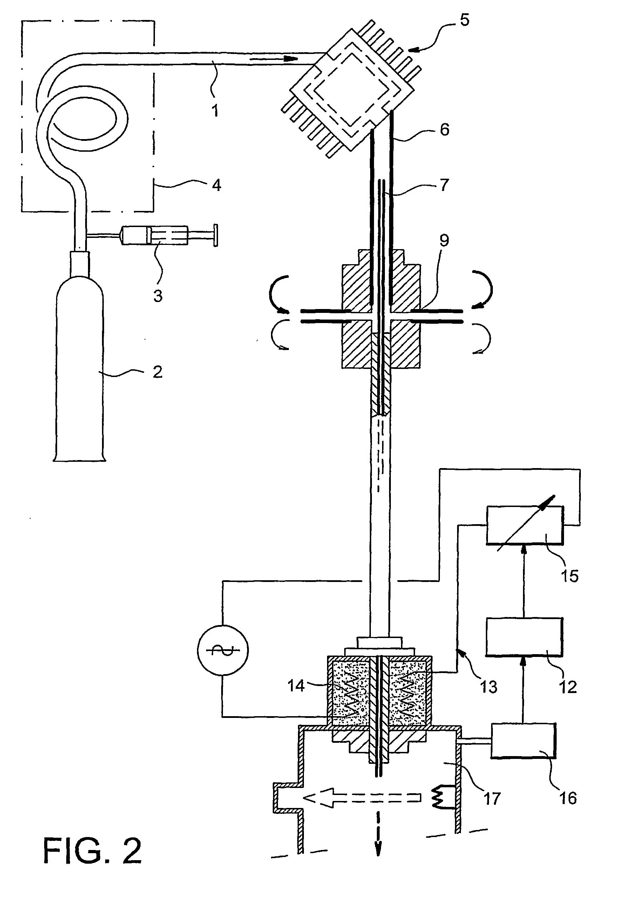

La figure 2 illustre un autre mode de réalisation analogue au précédent, si ce n'est que le détecteur 10 est remplacé par un autre détecteur de pression 16 se branchant sur la chambre 17 du spectromètre de masse 8. De façon connue, la jauge d'ionisation Hewlett-Packard® « HP59864 » par exemple, peut estimer la pression dans la chambre 17 à partir de la densité de l'air mesurée dans le spectromètre de masse. Le détecteur 16 renseigne le module de commande 12 de la même faç on que le détecteur précédent 10, le reste de l'appareillage étant inchangé. Il est en effet apparu parfaitement possible de régler le chauffage de l'interface au moyen de la pression dans la chambre 17. L'interface reste ouverte dans ce mode de réalisation.

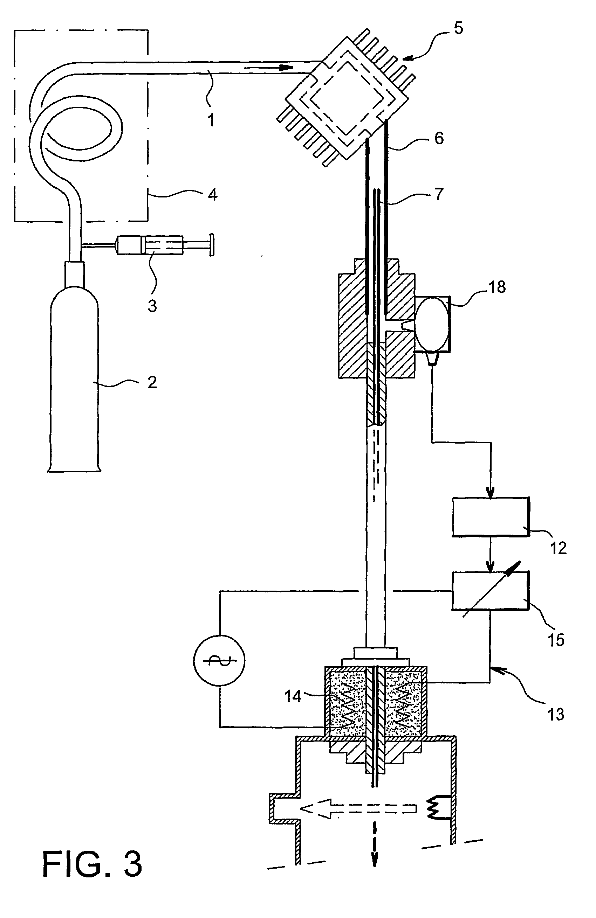

Une interface fermée est illustrée à la figure 3. Le tube 6 ne communique plus avec l'extérieur, de sorte que le seul exutoire de l'éluat est le tube capillaire 7. L'interface fermée n'avait pas été considérée dans le brevet précédent, mais il est possible de lui appliquer les perfectionnements de celui-ci. On peut par exemple disposer un capteur de pression 18, par exemple le capteur Sensor Technics® "HCX Series", au bout du tube 6 pour y mesurer la pression de l'éluat et l'asservir à une valeur fixe qui garantit l'égalité des débits. La commande de la température de l'interface se fait encore par le module de commande 12 et le circuit électrique de chauffage.

## Revendications

1. Dispositif de couplage d'un chromatographe (1) et d'un spectromètre de masse (8), comprenant une interface fermée entre un détecteur final (5) du chromatographe et le spectromètre, l'interface comprenant un tube (6) sortant du chromatographe dans lequel un tube capillaire (7) menant dans le spectromètre est enfoncé, et un moyen de réglage (14, 15) de température, **caractérisé en ce qu'**il comprend un capteur de pression (18) dans le tube sortant du chromatographe, par lequel un module de commande (12) du moyen de réglage de température est renseigné.

2. Dispositif de couplage d'un chromatographe (1) et d'un spectromètre de masse (8), comprenant une interface ouverte entre un détecteur final (5) du chromatographe et le spectromètre, l'interface comprenant un tube (6) sortant du chromatographe dans lequel un tube capillaire (7) menant dans le spectromètre est enfoncé, et un moyen de réglage (14, 15) de température, **caractérisé en ce qu'**il comprend un capteur de débit ou un détecteur de fuite (10) à travers le tube sortant du chromatographe par lequel un module de commande (12) du moyen de réglage de température est renseigné.

3. Dispositif de couplage d'un chromatographe (1) et d'un spectromètre de masse (8), comprenant une interface ouverte entre un détecteur final (5) du chromatographe et le spectromètre, l'interface comprenant un tube (6) sortant du chromatographe dans lequel un tube capillaire (7) menant dans le spectromètre est enfoncé, et un moyen de réglage (14, 15) de température, **caractérisé en ce qu'**il comprend un capteur de pression (16) dans une chambre du spectromètre de masse, par lequel un module de commande (12) du moyen de réglage de température est renseigné.

4. Dispositif d'analyse comprenant un micro-chromatographe et un spectromètre de masse, la sortie du micro-chromatographe étant reliée à l'entrée du spectomètre de masse par un dispositif de couplage automatisé selon l'une quelconque des revendications 1 à 3.

5. Dispositif d'analyse selon la revendication 4, muni, en outre, en amont du micro-chromatographe, d'un dispositif de pré-concentration reposant sur une adsorption suivie d'une thermo-désorption.

## Claims

1. Coupling device between a chromatograph (1) and a mass spectrometer (8), comprising a closed interface between a final detector (5) of the chromatograph and the spectrometer, the interface comprising a tube (6) coming out of the chromatograph into which a capillary tube (7) leading to the spectrometer is pushed, and a temperature adjustment means (14, 15), **characterised in that** it comprises a pressure sensor (18) in the tube coming out of the chromatograph, through which a control module (12) controlling the temperature adjustment means receives data.

2. Coupling device between a chromatograph (1) and a mass spectrometer (8), comprising an open interface between a final detector (5) of the chromatograph and the spectrometer, the interface comprising a tube (6) coming out of the chromatograph into which a capillary tube (7) leading to the spectrometer is pushed, and a temperature adjustment means (14, 15), **characterised in that** it comprises a flow sensor or a leak detector (10) through the tube coming out of the chromatograph, through which a control module (12) controlling the temperature adjustment means receives data.

3. Coupling device between a chromatograph (1) and a mass spectrometer (8), comprising an open interface between a final detector (5) of the chromatograph and the spectrometer, the interface comprising a tube (6) coming out of the chromatograph into which a capillary tube (7) leading to the spectrometer is pushed, and a temperature adjustment means (14, 15), **characterized in that** it comprises a pressure sensor (16) in a chamber of the mass spectrometer, through which a control module (120 controlling the temperature adjustment means receives data.

4. Analysis device comprising a micro-chromatograph and a mass spectrometer, the output from the micro-chromatograph being connected to the input to the mass spectrometer through an automated coupling device according to any one of claims 1 to 3.

5. Analysis device according to claim 4, also provided with a preconcentration device on the input side of the micro-chromatograph based on adsorption followed by a thermal desorption.

## Patentansprüche

1. Vorrichtung zur Kopplung eines Chromatographen (1) und eines Massenspektrometers (8), eine geschlossene Schnittstelle zwischen einem finalen Detektor (5) des Chromatographen und dem Spektrometer umfassend, wobei die Schnittstelle ein aus dem Chromatograph austretendes Rohr (6), in dem ein in das Spektrometer führendes Kapillarrohr (7) steckt, und eine Temperaturregelungseinrichtung (14, 15) umfasst,
**dadurch gekennzeichnet, dass** sie einen Drucksensor (18) in dem aus dem Chromatograph austretenden Rohr umfasst, durch den ein Steuermodul (12) der Temperaturregelungseinrichtung informiert wird.

2. Vorrichtung zur Kopplung eines Chromatographen (1) und eines Massenspektrometers (8), eine offene Schnittstelle zwischen einem finalen Detektor (5) des Chromatographen und dem Spektrometer umfassend, wobei die Schnittstelle ein aus dem Chromatograph austretendes Rohr (6), in dem ein in das Spektrometer führendes Kapillarrohr (7) steckt, und eine Temperaturregelungseinrichtung (14, 15) umfasst, **dadurch gekennzeichnet, dass** sie einen Detektor oder einen Sensor (1o) eines Lecks oder eines Abflusses - durch das aus dem Chromatograph austretende Rohr - umfasst, durch den ein Steuermodul (12) der Temperaturregelungseinrichtung informiert wird.

3. Vorrichtung zur Kopplung eines Chromatographen (1) und eines Massenspektrometers (8), eine offene Schnittstelle zwischen einem finalen Detektor (5) des Chromatographen und dem Spektrometer umfassend, wobei die Schnittstelle ein aus dem Chromatograph austretendes Rohr (6), in dem ein in das Spektrometer führendes Kapillarrohr (7) steckt, und eine Temperaturregelungseinrichtung (14, 15) umfasst, **dadurch gekennzeichnet, dass** sie einen Drucksensor (16) in einer Kammer des Massenspektrometers umfasst, durch den ein Steuermodul (12) der Temperaturregelungseinrichtung informiert wird.

4. Analysevorrichtung mit einem Mikrochromatograph und einem Massenspektrometer, wobei der Ausgang des Mikrochromatographen durch eine automatisierte Kopplungsvorrichtung nach einem der Ansprüche 1 bis 3 mit dem Eingang des Massenspektrometers verbunden ist.

5. Analysevorrichtung nach Anspruch 4, die außerdem, vor dem Mikrochromatograph, eine Vorkonzentrationsvorrichtung umfasst, die auf einer Adsorption gefolgt von einer Thermodesorption beruht.
